# EUROPÄISCHE PATENTSCHRIFT

(11) **EP 0 663 932 B1**
(45) Veröffentlichungstag und Bekanntmachung des Hinweises auf die Patenterteilung: **07.05.1997**
(21) Anmeldenummer: 93921854.1
(22) Anmeldetag: 25.09.1993
(51) Int. Cl.: C08G 65/34, C11D 3/37

(54) **VERWENDUNG VON ACETALDEHYDACETALEINHEITEN ENTHALTENDEN POLYACETALEN IN WASCH- UND REINIGUNGSMITTELN**
USE OF POLYACETALS CONTAINING ACETALDEHYDE ACETAL UNITS IN WASHING AND CLEANING AGENTS
UTILISATION DE POLYACETALS CONTENANT DES UNITES ACETAL D'ALDEHYDE ACETIQUE COMME DETERGENTS ET NETTOYANTS

(30) Priorität: 05.10.1992 DE 4233340
(43) Veröffentlichungstag der Anmeldung: 26.07.1995
(73) Patentinhaber: BASF Aktiengesellschaft, 67063 Ludwigshafen (DE)
(72) Erfinder: KRONER, Matthias, D-67304 Eisenberg (DE); HARTMANN, Heinrich, D-67117 Limburgerhof (DE); PERNER, Johannes, D-67434 Neustadt (DE); JAEGER, Hans-Ulrich, D-67434 Neustadt (DE); DIESSEL, Paul, D-67112 Mutterstadt (DE); BAUR, Richard, D-67112 Mutterstadt (DE); SCHWENDEMANN, Volker, D-67434 Neustadt (DE)
(86) Internationale Anmeldenummer: EP9302613
(87) Internationale Veröffentlichungsnummer: WO9407939

(56) Entgegenhaltungen:
- GB-A- 1 089 871
- US-A- 4 713 441

## Beschreibung

Die Erfindung betrifft Acetaldehydacetaleinheiten enthaltende lösliche Polyacetale, die durch kationisch initiierte Polyaddition von Alkohlen und Divinylethern erhältlich sind, ein Verfahren zur Herstellung der genannten Acetale sowie die Verwendung der Acetale in Wasch- und Reinigungsmitteln und als Dispergiermittel für feinteilige Mineralien.

Aus Journal of Polymer Science: Polymer Letters Edition, Vol. 18, 293-297 (1980) ist die Herstellung von Polyacetalen durch Säure katalysierte Anlagerung von Polyolen an Divinylether bekannt. So erhält man beispielsweise durch Polyaddition von trans-1,4-Cyclohexandimethanol an Butandiol-divinylether unter der katalytischen Wirkung von p-Toluolsulfonsäure ein Polyacetal mit einem Molekulargewichtvon 200.000.

Bei der Umsetzung von Diethylenglykoldivinylether, Bisphenol A und 1,1,1-Trimethylolpropan im molaren Verhältnis von 6:3:2 in Gegenwart von Trichloressigsäure als Katalysator entstehen vernetzte Polyacetale. Die Polyacetale werden in der Medizin zur kontrollierten Freisetzung von Wirkstoffen verwendet.

Aus der FR-A-2 336 936 ist ebenfalls die Herstellung von vernetzten unlöslichen Polyacetalen bekannt. Die vernetzten Polyacetale werden durch Umsetzung von cyclischen Divinylethern mit Glycerin erhalten.

Der Erfindung liegt die Aufgabe zugrunde, für Wasch- und Reinigungsmittel Additive aufzuzeigen, die die Viskositäten nichtionischer Tenside erniedrigen.

Die Aufgabe wird erfindungsgemäß gelöst mit der Verwendung von Acetaldehydacetaleinheiten enthaltenden löslichen Polyacetalen, die erhältlich sind durch kationisch initiierte Polyaddition von
(a) Verbindungen, die mindestens drei Hydroxygruppen enthalten,
(b) endständige Vinylethergruppen enthaltenden Vinylethern oder Mischungen aus solchen Divinylethern und Monovinylethern und
(c) Dihydroxyverbindungen und/oder Monohydroxyverbindungen, wobei das Verhältnis der Summe der Hydroxygruppen der Verbindungen (a) und (c) zur Summe der Vinylethergruppen der Verbindungen (b) 0,1 bis 10 beträgt, als Zusatz zu phosphatarmen und phosphatfreien Wasch- und Reinigungsmitteln.

Bei der Umsetzung der Komponenten (a) und (b) kann eine Vernetzung - auch in Abwesenheit von Dihydroxyverbindungen und/oder Monohydroxyverbindungen - verhindert werden, wenn das Verhältnis der Hydroxygruppen zu Vinylethergruppen in den Verbindungen (a) und (b) größer als eins ist. Die Vernetzung der entstehenden Polyacetale kann außerdem dadurch praktisch verhindert werden, indem man bei der Polyaddition Verbindungen der Gruppe (c) mitverwendet. Diese Verbindungen werden bei der Polyaddition in solchen Mengen eingesetzt, daß wasserlösliche Acetaldehydacetaleinheiten enthaltende Polyacetale entstehen.

Geeignete Verbindungen der Gruppe (a) Polyhydroxyverbindungen, die mindestens 3 OH-Gruppen im Molekül enthalten, beispielsweise Glycerin, Oligoglycerine mit 2 bis 10 Glycerineinheiten, Trimethylolpropan, Erythrit, Pentaerythrit, Polyvinylalkohole mit Molekulargewichten bis 100.000, Polyallylalkohole mit Molekulargewichten (Zahlenmittel) bis 100.000, Polyhydroxymethylene, die durch Polymerisation von Vinylidencarbonat erhältlich sind, Monosaccharide wie Glukose, Mannose, Fructose, Levoglucosan, Disaccharide wie Saccharose, Lactose, Maltose, Leucrose, Isomaltose, Isomaltulose, Oligo- und Polysaccharide wie abgebaute Stärke, Stärke, Inulin, Fructo-polysaccharide, Maltodextrine, Pentosen, Levan, verzweigte Fructane, reduzierte Kohlenhydrate wie Beispielsweise Sorbit, Mannit, Isomalt, Inosit und oxidierte Kohlenhydradte, die Carboxylgruppen tragen, wie Zuckercarbonsäuren, Gluconsäure und Schleimsäure sowie modifizierte Kohlenhydrate, wie C₁- bis C₂₀-Alkylglucoside, wie Methylglucosid, Ethylglucosid, n-Propylglucosid, Isopropylglucosid, n-Butylglucosid, Isobutylglucosid, n-Hexylglucosid und Palmitylglucosid und Levoglucan. Bevorzugt eingesetzte Verbindungen der Gruppe (a) sind Glucose, Saccharose, Alkylglucoside wie Methylglucosid, Dextrose, Sorbit, Mannit, Erythrit und Pentaerythrit.

Die Verbindungen der Gruppe (b) sind endständige Vinylethergruppen enthaltende Divinylether oder ihre Gemische mit Monovinylethern. Geeignete Divinylether sind beispielsweise alle 2-fach vinylierten Diole, z.B. Ethylenglykoldivinylether, Propylenglykoldivinylether, Butandioldivinylether, Butindioldivinylether, Butendioldivinylether, Hexandioldivinylether, Bis (hyroxymethyl)cyclohexandivinylether, Diethylenglykoldivinylether, Triethylenglykoldivinylether, Tetraethylenglykoldivinylether sowie Divinylether von Polyethylenglykolen mit einem Molekulargewicht des Polyethylenglykols bis zu 20.000, Polypropylenglykoldivinylether mit Molekulargewichten bis zu 10.000 sowie Divinylether von Copolymerisaten aus Polyethylenoxid und Polypropylenoxid mit Molekulargewichten bis zu 10.000 sowie Polytetrahydrofurandivinylether. Bevorzugt eingesetzte Verbindungen der Gruppe (b) sind 1,4-Butandioldivinylether, 1,6-Hexandioldivinylether, Ethylenglykoldivinylether, Diethylen- und Triethylenglykoldivinylether.

Geeignete Monovinylether, die in Mischung mit den Divinylethern eingesetzt werden, sind beispielsweise C₁- bis C₂₀-Alkylvinylether, wie Methylvinylether, Ethylvinylether, n-Propylvinylether, Isopropylvinylether, n-Butylvinylether, Isobutylvinylether, Hexylvinylether, 2-Ethylhexylvinylether, Octylvinylether, Decylvinylether und C₂₀-Alkylvinylether. Andere geeignete Monovinylether sind Phenylvinylether, Vinylether von Hydroxycarbonsäureestern, wie Vinyloxiessigsäureethylester, Vinyloxiessigsäuremethylester, Vinyloxipropionsäureethylester, Vinyloxipropionsäuremethylester, Vinyloxivaleriansäuremethylester, Vinyloxyvaleriansäureethylester, Vinyloxybernsteinsäuredimethylester, Vinyloxistearinsäuremethylester, Vinyloxitricarballylsäuretrimethylester, Vinylether von Zitronensäuretrialkylestern, wie Vinylether des Zitronensäuretrimethylesters und der Vinylether des Zitronensäuretriethylesters. Als Monovinylether können ebenso Glucale eingesetzt werden, z.B. Triacetylgalactalglucal oder Tetrabenzyl-2-hydroxyglucal.

Weitere geeignete Monovinylether sind Hydroxyvinylether, die beispielsweise durch Vinylierung einer Hydroxygruppe von Diolen erhältlich sind. Geeignete Monovinylether dieser Art sind beispielsweise Butandiolmonovinylether, Hexandiolmonovinylether, Diethylenglykolmonovinylether, Triethylenglykolmonovinylether, Tetraethylenglykolmonovinylether, Pentaethylenglykolmonovinylether sowie Monovinylether von Copolymerisaten aus Ethylenoxid und Propylenoxid und Monovinylether von Polyethylenoxid und Propylenoxid mit Molekulargewichten (Zahlenmittel) bis zu 10.000

Falls als Komponente (b) Mischungen aus Divinylethern und Monovinylethern eingesetzt werden, so enthalten diese Mischungen 1 bis 100, vorzugsweise 20 bis 100 Mol-% an endständigen Vinylethergruppen enthaltenden Divinylethern.

Als Monomere der Gruppe (c) kommen Dihydroxyverbindungen und/oder Monohydroxyverbindungen in Betracht. Als Dihydroxyverbindungen können prinzipiell alle Verbindungen verwendet werden, die 2 OH-Gruppen aufweisen, z.B. Alkylenglykole, wie Ethylenglykol, Diethylenglykol, Triethylenglykol, Tetraethylenglykol, Polyethylenglykole bis zu Molekulargewichten von 10 000, Propylenglykol, Dipropylenglykol, Polypropylenglykole mit Molekulargewichten bis zu 10 000, Copolymerisate aus Ethylenoxid und Propylenoxid und gegebenenfalls Butylenoxid mit Molekulargewichten bis zu 10 000, Polytetrahydrofuran mit Molekulargewichten bis zu 10 000, 1,2-Butandiol, 1,3-Butandiol, 1,4-Butandiol, 1,2-Pentandiol, Neopentylglykol, 1,5-Pentandiol, 1,2-Hexandiol, 1,3-Hexandiol, 1,4-Hexandiol, 1,5-Hexandiol, 1,6-Hexandiol, 1,7-Heptandiol, 1,8-Octandiol, 2,5-Dimethyl-2,5-hexandiol, 1,4-Bis-(hydroxymethyl)cyclohexan, Brenzkatechin, Resorzin und Hydrochinon. Außer den Alkylenglykolen und Phenolen können auch solche Dihydroxiverbindungen als Monomer der Gruppe (c) eingesetzt werden, die zusätzlich weitere funktionelle Gruppen tragen, z.B. Ester-, Amid-, Nitril-, Ether-, Acetal-, Imidoester-, Keton-, Imid- und Thioethergruppen sowie CC-Doppel- oder CC-Dreifachbindungen. Beispiele für geeignete Verbindungen dieser Art sind Weinsäuredimethylester, Weinsäurediethylester, 2,2-Bis(hydroxymethyl)propionsäuremethylester, Hydroxypivalinsäureneopentylglykolester, 2-Buten-1,4-diol und 3-Hexin-2,5-diol, Terephthalsäure-bis(ethylenglykolester), 1-Phenyl-ethylenglykol, Octadecandiol aus hydriertem Rizinusöl. Beispiele für weitere geeignete Monomere der Gruppe (c) sind Dihydroxycarbonsäureester, die aus natürlichen Fetten und Ölen isoliert werden können oder mittels enzymatischen, bakteriellen oder chemischen Reaktionen herstellbar sind. Beispiele für solche Verbindungen sind Dihydroxyfettsäuren wie 10,12-Dihydroxystearinsäure, 9,10-Dihydroxystearinsäure, 9,12-Dihydroxy-10-octadecensäure, 9,12-Dihydroxy-9-oxo-10-octadecensäure, 10,13-Dihydroxy-11-octadecensäure und 12,13-Dihydroxy-9-oxo-10-octadecensäure. Dihydroxyfettsäureester sind außerdem durch Hydroxylieren und Oxidieren von Fettsäuren natürlicher Herkunft erhältlich, beispielsweise aus Ricinolsäure, Linolsäure, Ölsäure, Linolensäure, Elaidinsäure, Palmitoleinsäure, Myristoleinsäure, Palmitinsäure und Stearinsäure. Durch Wasserabspaltung von Polyolen entstandene Diole, wie beispielsweise Dianhydrosorbit, Dianhydromannit, Dianhydroerythrit sind ebenfalls geeignet. Bevorzugt eingesetzte Monomere der Gruppe (c) sind Triethylenglykol, Weinsäuredimethylester und Weinsäurediethylester.

Geeignete Monohydroxyverbindungen der Gruppe (c), die gegebenenfalls bei der kationisch initiierten Polyaddition mitverwendet werden, sind aliphatische und aromatische Verbindungen, die jeweils eine Hydroxylgruppe aufweisen. Die üblicherweise in Betracht kommenden Hydroxylgruppen enthaltenden aliphatischen und aromatischen Verbindungen enthalten bis zu 30 Kohlenstoffatome im Molekül. Bei diesen Stoffen handelt es sich in erster Linie um Alkohole und Phenole. Sie können jedoch auch noch weitere funktionelle Gruppen enthalten, beispielsweise Ester-, Amid-, Nitril-, Ether, Acetal-, Amidoester-, Imid- und Thioethergruppen sowie CC-Doppelbindungen und CC-Dreifachbindungen enthalten. Beispiele für in Betracht kommende Verbindungen sind C₁- bis C₃₀-einwertige Alkohle, wie Methanol, Ethanol, n-Propanol, Isopropanol, n-Butanol, Isobutanol, tert.-Butanol, Pentanole, 2-Methylbutanol, 3-Methylbutanol, tert.-Amylalkohol, 3-Methyl-3-pentanol, Cyclohexanol, n-Hexanol, n-Octanol, Isooctanol, Decanol, Dodecanol, Stearylalkohol und Palmitylalkohol, sowie Oxoalkohole, die durch Anlagerung von Kohlenmonoxid und Wasserstoff an Olefine nach dem Oxoverfahren erhältlich sind, Allylalkohol, Phenol, o-, m- und p- Kresol, Alkylphenole, Benzylalkohol, Propargylalkohol, Butinol, 3-Methyl-3-buten-1-ol, 3-Methyl-2-buten-1-ol, 2-Methyl-3-buten-2-ol, 2-Methyl-3-butin-2-ol und 1-Ethinylcyclohexanol.

Außerdem kommen als Monomere der Gruppe (c) Umsetzungsprodukte von einwertigen Alkoholen und Phenolen mit 1 bis 100 Mol Alkylenoxiden in Betracht. Geeignete Alkylenoxide sind beispielsweise Ethylenoxid, Propylenoxid und Butylenoxide. Geeignete Alkoxylierungsprodukte sind beispielsweise Ethylenglykolmonomethylether, Ethylenglykolmonoethylether, Ethylenglykolmonobutylether, Propylenglykolmonobutylether, 1,2-Butylenglykolmonomethylether, 2-(4-Methoxyphenyl)-ethanol, Diethylenglykolmonomethylether, Diethylenglykolmonoethylether, Diethylenglykolmonobutylether, Umsetzungsprodukte von 1 Mol Methanol mit 3,9 oder 25 Mol Ethylenoxid, Umsetzungsprodukte eines Oxoalkohols mit 3 bis 25 mol Ethylenoxid. Weitere geeignete monofunktionelle Alkohole sind beispielsweise Ethylenchlorhydrin, Propylenchlorhydrin, 6-Chlorhexanol, 8-Chloroctanol, Glykolsäuremethylester, Glykolsäureethylester, Milchsäuremethylester, Milchsäureethylester, Milchsäureisopropylether, Milchsäure-n-butylester, Milchsäure-isobutylester, Mandelsäuremethylester, Mandelsäureethylester, Hydroxipropionnitril, Hydroxibuttersäuremethylester, Hydroxybuttersäureethylester, Hydroxyvaleriansäuremethylester, Hydroxyvaleriansäureethylester, Hydroxyvaleriansäureisopropylester, Hydroxyisovaleriansäuremethylester, Hydroxyisovaleriansäureethylester, Hydroxyisobuttersäuremethylester, Hydroxyisobuttersäureethylester, Hydroxypivalinsäuremethylester, Hydroxypivalinsäureethylester, Benzilsäureethylester, Mandelsäurenitril, Hydroxymalonsäurediethylester, Hydroxymethylmaleinsäurediethylester, Hydroxymethylmalonsäurediethylester, Äpfelsäurediethylester, Zitronensäuretriethylester, Hydroxycrotonsäureethylester, Äpfelsäuredimethylester, Zitronensäuretrimethylester, Zitronensäuretri-n-propylester, Hydroxycrotonsäuremethylester, 3-Hydroxy-4-hexensäuremethylester, 2-Hydroxy-3,3-Dimethylbutyrolacton, Hydroxyaceton, Glykolaldehyd, Vanillin, Eugenol, Salicylaldehyd und Acetoin.

Außerdem eignen sich Hydroxyfettsäureester, die bakteriell, enzymatisch oder durch chemische Hydroxylierung von Ölen oder Fetten natürlichen Ursprungs herstellbar sind, beispielsweise auf Basis von Linolsäure, Linolensäure, Ölsäure, Elaidinsäure, Ricinolsäure, Palmitinsäure und Stearinsäure. Hieraus erhält man beispielsweise 10-Hydroxy-12-octadecensäuremethylester, 10-Hydroxy-12,15-octadecadiensäuremethylester, 12-Hydroxyölsäuremethylester, Ricinolsäuremethylester, 10-Hydroxyoctadecansäuremethylester, 10-Hydroxystearinsäuremethylester, Hydroxypalmitinsäuremethylester, 10-Hydroxyhexadecansäuremethylester, 13-Hydroxy-12,13-epoxy-10-octadecansäuremethylester, 9-Hydroxy-10-oxo-12-octadecensäuremethylester und 13-Hydroxypalmitinsäuremethylester.

Alle Monomere der Gruppe (c) können in Form der Mono- und Divinylether als Monomere der Gruppe (b) eingesetzt werden.

Die Monomeren (a), (b) und (c) werden kationisch polymerisiert. Hierbei addiert die OH-Gruppe eines Monomeren der Gruppe (a) an eine Vinylethergruppe des Monomers der Gruppe (b) unter Bildung eines Acetaldehydacetals. Bei dieser Polymerisation erhält man eine polymere Haupt- oder Seitenkette, in der die Monomereinheiten über Acetaldehydacetal-Einheiten der Struktur 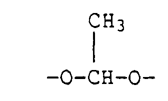 miteinander verknüpft sind. Das Verhältnis der Summe der Hydroxygruppen der Verbindungen (a) und (c) zur Summe der Vinylethergruppen der Verbindungen (b) beträgt üblicherweise 0,1 bis 10, vorzugsweise 0,5 bis 5.

Die kationische Copolymerisation der Monomeren der Gruppen (a), (b) und gegebenenfalls (c) kann mit Hilfe von allen organischen oder anorganischen sauer reagierenden Stoffen initiiert werden. Geeignete kationische Initiatoren sind beispielsweise Oxalsäure, Weinsäure, Adipinsäure, Bernsteinsäure, Bernsteinsäureanhydrid, Zitronensäure, Ameisensäure, Essigsäure, Propionsäure, Äpfelsäure, ein- oder mehrfach halogenierte Carbonsäuren, wie Trifluoressigsäure oder Trichloressigsäure, Chlorwasserstoff, Bromwasserstoff, Jodwasserstoff, Schwefelsäure, Phosphorsäure, Benzolsulfonsäure, p-Toluolsulfonsäure, Borsäure, Ascorbinsäure, saures Aluminiumoxid, Aluminiumsulfat, Kaliumaluminiumsulfat, Eisen-II-sulfat, Eisen-III-sulfat, Aluminiumoxid, Titanylsulfat, Eisen-III-chlorid, Bortrifluorid, Bortrichlorid, Bortribromid, Jod, Ionenaustauscher in der Säureform und mit Säure beladene inerte feste Stoffe. Die Initiatoren für die kationische Polymerisation werden üblicherweise in Mengen von 0,001 bis 20, vorzugsweise 0,01 bis 1 Gew.-%, bezogen auf die Monomeren der Gruppen (a) und (b), eingesetzt. Die Copolymerisation verläuft im allgemeinen stark exotherm. Die Reaktionstemperaturen betragen je nach Aktivität des eingesetzten Initiators zwischen -20 und 250, vorzugsweise 0 bis 200°C.

Acetaldehydacetaleinheiten enthaltende lösliche Polyacetale sind beispielsweise durch Umsetzung folgender Verbindungen erhältlich:
- Stärke, Butandioldivinylether, Milchsäureethylester,
- Stärke, Triethylenglykoldivinylether und Vinyloxyessigsäureethylester,
- Stärke, Butandioldivinylether, Triethylenglykol und Milchsäureethylester,
- Stärke, Butandioldivinylether und Zitronensäure,
- Stärke, Butandioldivinylether und Zitronensäuretriethylester,
- abgebaute Stärke, Butandioldivinylether und Vinyloxypropionsäureethylester,
- abgebaute Stärke, Butandioldivinylether, Glykolsäureethylester,
- abgebaute Stärke, Butindioldivinylether und Vinyloxyessigsäureethylester,
- abgebaute Stärke, Butendioldivinylether und Hydroxybutylvinylether-Ethoxylate,
- Dextrin, Hydroxybutylvinylether-Ethoxylate, Triethylenglykoldivinylether und Vinyloxyessigsäureethylester,
- Dextrin, Weinsäurediethylester, Milchsäureethylester und Butandioldivinylether,
- Saccharose, Butandioldivinylether und Vinyloxyessigsäureethylester,
- Saccharose, Butandioldivinylether und Milchsäureethylester,
- Saccharose, Triethylenglykol, Butandioldivinylether und Milchsäureethylester,
- Saccharose, Weinsäurediethylester, Butindioldivinylether und Milchsäureethylester,
- Saccharose, Weinsäurediethylester, Butandioldivinylether und Zitronensäuretriethylester,
- Saccharose, Weinsäurediethylester, Butandioldivinylether und Zitronensäure,
- Lactose, Weinsäurediethylester, Butandioldivinylether und Milchsäureethylester,
- Lactose, Vinyloxyessigsäureethylester und Butandioldivinylether,
- Glucose, Weinsäurediethylester, Butandioldivinylether und Milchsäureethylester,
- Glucose, Triethylenglykol, Butandioldivinylether und Milchsäureethylester,
- Glucose, Vinyloxyessigsäureethylester und Butandioldivinylether,
- Sorbit, Vinyloxyessigsäureethylester und Butandioldivinylether,
- Sorbit, Triethylenglykol, Butandioldivinylether und Milchsäureethylester,
- Sorbit, Weinsäurediethylester, Butandioldivinylether und Glykolsäureethylester,
- Sorbit, Octadecylvinylether und Butandioldivinylether,
- Sorbit, Butandioldivinylether, Vinyloxyessigsäureethylester und Octadecylvinylether,
- Methylglucosid, Vinyloxyessigsäureethylester, Butandiol-divinylether und Octadecylvinylether,
- Methylglucosid, Weinsäurediethylester, Butandioldivinylether und Glykolsäureethylester,
- Methylglucosid, Triethylenglykol, Butandioldivinylether und Milchsäureethylester,
- Methylglycosid, Weinsäure, Butandioldivinylether und Zitronensäure.

Bei dem Verfahren zur Herstellung von Acetaldehydacetaleinheiten enthaltenden löslichen Polyacetalen, die praktisch nicht vernetzt sind, verfährt man so, daß man
(a) Verbindungen, die mindestens 3 Hydroxygruppen enthalten, und
(b) endständige Vinylethergruppen enthaltende Divinylether oder Mischungen aus solchen Divinylethern und Alkylvinylethern in Gegenwart von
(c) Dihydroxyverbindungen und/oder Monohydroxyverbindungen und sauren Katalysatoren, die die kationische Polyaddition initiieren,

bei Temperaturen von mindestens -20°C in solchen Verhältnissen umsetzt, daß wasserlösliche Additionsprodukte entstehen. Die Reihenfolge der Zugabe der Komponenten zum Reaktionsgemisch ist beliebig. Vorzugsweise legt man die Verbindungen der Komponente (a) zusammen mit dem Initiator vor und fügt nacheinander die übrigen Reaktionskomponenten hinzu. So kann man beispielsweise 1 Mol Sorbit zunächst mit 1 Mol Vinyloxyessigsäureethylester, dann mit 1 Mol Octadecylvinylether und danach mit 1 Mol Butandioldivinylether reagieren lassen. Man kann jedoch auch so vorgehen, daß man zunächst beispielsweise 1 Mol Sorbit zuerst mit 4 Mol Vinyloxyessigsäureethylester und danach mit 1 Mol Butandioldivinylether reagieren läßt. Ein anderes Beispiel für die Herstellung der Polyacetale besteht darin, daß man eine Lösung von Methylglucosid in Triethylenglykol mit Butandioldivinylether reagieren läßt. Ebenso entstehen Polyacetale, wenn man eine Lösung von Methylglucosid in Weinsäurediethylester mit Butandiol-divinylether reagieren läßt.

Man kann auch eine Suspension von Methylgucosid in Weinsäurediethylester oder Triethylenglykol mit Butandioldivinylether umsetzen oder Methylglucosid zuerst mit Vinyloxyessigsäureethylester und danach mit Butandioldivinylether kationisch polymerisieren.

Auch Feststoffe wie Stärke sind dieser Reaktion zugänglich, indem man beispielsweise Stärke zunächst mit Vinyloxyessigsäureethylester und danach mit Butandioldivinylether zur Reaktion bringt. Das Reaktionsprodukt kann man außerdem noch mit Zitronensäuretriethylester umsetzen, wobei sich dieser Ester an eine noch im Polyacetal vorhandene Vinylethergruppe addiert. Stärke kann man auch zunächst mit Butandioldivinylether und danach mit Zitronensäuretriethylester oder mit Zitronensäuretrimethylester zu Acetaldehydacetaleinheiten enthaltenden Polyacetalen umsetzen. Auch die umgekehrte Reihenfolge ist möglich, indem man zunächst Butandioldivinylether mit Zitronensäuretriethylester oder Zitronensäuretrimethylester zur Reaktion bringt und das Reaktionsprodukt anschließend mit Stärke umsetzt. Anstelle von Stärke kann man auch Methylglucosid verwenden.

Die Verbindungen der Gruppe (a) sind zumindest bei höheren Temperaturen in den Dihydroxyverbindungen der Komponente (c) löslich. Ob daher bei der Reaktion eine Lösung oder eine Aufschlämmung der Verbindung der Gruppe (a) in Dihydroxyverbindungen und/oder Monohydroxyverbindungen verwendet wird, ist somit von der Temperatur abhängig. Beispielsweise ist Methylglucosid bei einer Temperatur von 150°C in Weinsäurediethylester vollständig klar löslich, während es sich bei Temperaturen unterhalb von 150°C nur unvollständig löst und somit eine Suspension bzw. eine gesättigte Lösung vorliegt. Die Lösung oder Suspension wird anschließend mit mindestens einer Bindung der Gruppe (b), z.B. mit Butandioldivinylether versetzt und zur Reaktion gebracht.

Bei der Herstellung der löslichen bzw. unvernetzten Polyacetale benötigt man keine inerten Lösemittel. Man kann vielmehr die Verbindungen der Gruppe (c) als Verdünnungsmittel einsetzen. Vorzugsweise geht man von einer Schmelze, einer Aufschlämmung oder einer Lösung der Verbindungen (a) in einer Verbindung der Gruppe (c) aus und führt bei Temperaturen von mindestens 70, bevorzugt bei Temperaturen von oberhalb 90°C die kationische initiierte Polyaddition durch, indem man die Verbindungen der Gruppe (b) portionweise oder kontinuierlich zufügt, wobei die Umsetzung in Gegenwart kationischer Katalysatoren vorgenommen wird. Die Katalysatoren können beispielsweise zusammen mit den Verbindungen der Gruppe (c) in die Reaktionszone eingebracht werden. Man kann jedoch auch die Verbindungen, die mindestens 3 Hydroxygruppen enthalten (d.h. die Verbindungen der Gruppe (a)) mit der gesamten erforderlichen Menge an Verbindungen der Gruppe (b) und Katalysator versetzen und auf die erforderliche Reaktionstemperatur erhitzen. Die Verbindungen der Gruppe (a) und die Verbindung der Gruppe (b) sind oft nicht miteinander mischbar. Wie oben bereits erwähnt, bildet sich jedoch im Verlauf der kationisch initiierten Additionsreaktion eine homogene Reaktionsmischung aus. Beispielsweise entsteht eine homogene, klare und farblose Reaktionsmischung, wenn man Methylglucosid oder Sorbit bei Anwesenheit von katalytischen Mengen an Oxalsäure mit Vinyloxyessigsäureethylester und 1,4-Butandioldivinylether zur Reaktion bringt. Die Reaktionstemperaturen betragen in diesem Fall vorzugsweise 110 bis 170°C. Der Verlauf der Additionsreaktion läßt sich durch iodametrische Titration der Vinylethergruppen verfolgen.

Die Acetaldehydacetaleinheiten enthaltenden Polyacetale haben K-Werte (bestimmt nach H. Fikentscher in Tetrahydrofuran bei 25°C und einer Polyacetalkonzentration von 1 Gew.-%) von 9 bis 100. Sie sind bei pH-Werten unterhalb von 7 hydrolysierbar. Die Acetaldehydacetaleinheiten werden dabei unter Bildung von Acetaldehyd und anderen Hydrolyseprodukten gespalten. Die Hydrolyseprodukte sind biologisch abbaubar. Bereits der Einfluß von Kohlendioxid führt in wäßriger Lösung zur hydrolytischen Spaltung der Acetalgruppen. Die Polyacetale sind biologisch abbaubar. Sie werden als Zusatz zu phosphatarmen und phosphatfreien Wasch- und Reinigungsmitteln und als Dispergiermittel für feinteilige Mineralien, insbesondere Tonmineralien, Titandioxid und Kreide verwendet.

Unter phosphatarmen Waschmitteln sollen solche Waschmittel verstanden werden, deren Phosphatgehalt weniger als 25 Gew.-%, berechnet aus Natriumtriphosphat, beträgt. Die Zusammensetzung der Wasch- und Reinigungsmittelformulierungen kann sehr unterschiedlich sein. Wasch- und Reinigungsformulierungen enthalten üblicherweise 2 bis 50 Gew.-% Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Eng. News, Band 67, 35 (1989), tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Außerdem sind solche Waschmittelformulierungen von Interesse, die bis zu 60 Gew.-% eines Alkalisilikats und bis zu 10 Gew.-% eines erfindungsgemäß hergestellten Polyacetals enthalten.

Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren sowie Zeolith.

Die Polyacetale werden in Waschmitteln in Mengen von 0,5 bis 20, vorzugsweise 2 bis 10 Gew.-% eingesetzt.

Die hydrolysierten und neutralisierten Polyacetale eignen sich außerdem als Dispergiermittel für feinteilige Stoffe, z.B. Tone, Kreide, Kalziumcarbonat, Titandioxid, Eisenoxide, Kaoline, Aluminiumoxid, Zement und oxidische Glasuren für keramische Zwecke. Bei der Anwendung als Dispergiermittel sind üblicherweise Mengen von 0,02 bis 1 Gew.-%, bezogen auf die feinteiligen Stoffe notwendig.

Die Prozentangaben in den Beispielen sind Gewichtsprozent der K-Wert der Polyacetale wurde in 1 %iger Lösung in Tetrahydrofuran bei einer Temperatur von 25°C nach H. Fikentscher gemessen, vgl. Cell. Chem., Bd. 13, 58-64 und 71-74 (1932).

### Beispiele

Allgemeine Vorschrift zur alkalischen Nachbehandlung der estergruppentragenden Polyacetale (Herstellung wäßriger Natriumsalzlösungen):

Zu 30 g Polyacetal gibt man 150 ml Ethanol und verseift die Ester durch Zugabe von äquivalenten Mengen einer 25 %igen wäßrigen Natronlauge. Die Verseifung der Estergruppen erfolgt bei einer Temperatur von 20°C. Danach wird das Ethanol im Vakuum entfernt und die erhaltene Lösung mit Wasser verdünnt.

Allgemeine Vorschrift zur Herstellung der Acetaldehydacetal-einheiten enthaltenden Polyacetale

In einem Rundkolben, der mit Rührer und mit einer Vorrichtung für das Arbeiten unter Stickstoff versehen ist, werden jeweils. die Komponenten (a) und (c) vorgelegt und mit 0,3 g Oxalsäure versetzt. Die Mischung wird dann auf eine Temperatur von 150°C erhitzt. Bei Temperaturen oberhalb von 150°C bildet sich eine homogene Lösung. Man dosiert 1,4-Butandioldivinylether (Komponente (b)) zu und läßt das Reaktionsgemisch 1 Stunde bei 150°C nachreagieren. Mit Hilfe der Iodtitration von Proben, die dem Reaktionsgemisch entnommen werden, bestimmt man die Abnahme des Vinylethergruppengehalts. Nach Beendigung der Polyaddition beträgt der Vinylethergruppengehalt weniger als 1/100 des Anfangswerts. Zur Stabilisierung fügt man den Polyacetalen 2 g festes Natriumhydrogencarbonat zu. In Tabelle 1 sind die Einsatzstoffe, das Verhältnis der Hydroxylgruppen zu den Vinylethergruppen der Einsatzstoffe sowie der K-Wert der erhaltenen Polyacetale angegeben.

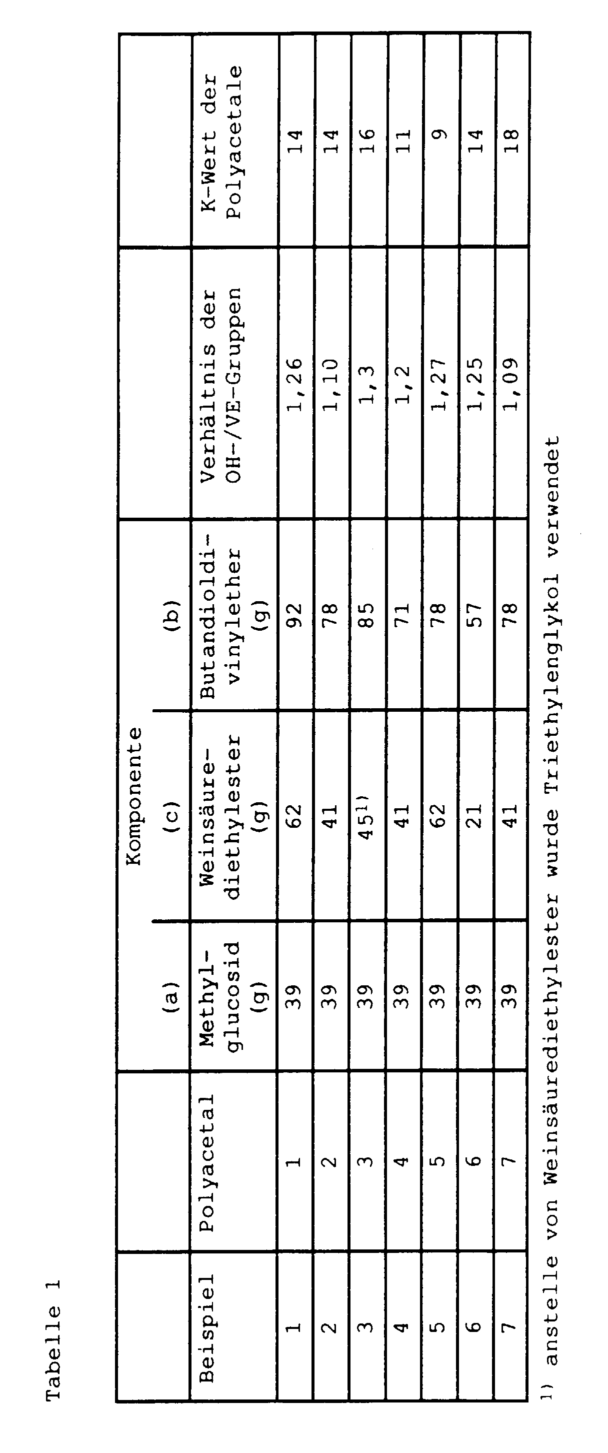

### Beispiel 8

Zur Herstellung von Polyacetal 8 gemäß der allgemeinen Vorschrift wird eine Lösung von 39,5 g (0,2 mol) Glucose, 45 g (0,3 mol) Triethylenglykol und 0,3 g Oxalsäure bei 145°C mit 92 g (0,65 mol) Butandioldivinylether zur Reaktion gebracht. Das Verhältnis der OH-Gruppen zu den Vinylethergruppen betrug 1,08. Der K-Wert des Polyacetals 8 beträgt 22. Durch alkalische Nachbehandlung (vgl. oben) erhält man die Natriumsalzlösung.

### Beispiel 9

Zur Herstellung des Polyacetals 9 wird gemäß der allgemeinen Vorschrift eine Lösung von 68,5 g (0,2 mol) Saccharose, 62 g (0,3 mol) Weinsäurediethylester und 0,3 g Oxalsäure bei 110°C mit 78 g (0,55 mol) Butandioldivinylether zur Reaktion gebracht. Der K-Wert des so erhaltenen Polyacetals beträgt 10. Durch alkalische Nachbehandlung gemäß der oben angegebenen Vorschrift erhält man die Natriumsalzlösung. Bei den Einsatzstoffen betrug das Verhältnis der OH-Gruppen zu den Vinylethergruppen 2,14.

### Beispiel 10

Zur Herstellung des Polyacetals 10 wird gemäß der oben angegebenen allgemeinen Vorschrift eine Lösung von 68,5 g (0,2 mol) Saccharose, 45 g (0,3 mol) Triethylenglykol und 0,3 g Oxalsäure bei 110°C mit 99 g (0,7 mol) 1,4-Butandioldivinylether zur Reaktion gebracht. Das Verhältnis der OH-Gruppen zu Vinylethergruppen beträgt 1,57. Man erhält ein Polyacetal mit einem K-Wert von 11. Durch alkalische Nachbehandlung erhält man die Natriumsalzlösung des Polyacetals.

### Beispiele 11 bis 16

In Analogie zur oben angegebenen Vorschrift wird eine Lösung von Milchsäureethylester und Butandioldivinylether zu einer Lösung oder Aufschlämmung von Methylglucosid in Weinsäurediethylester zugegeben, die 0,2 g Oxalsäure enthält. Die Einsatzmengen der Stoffe, die Reaktionstemperatur sowie das Verhältnis der OH-Gruppen zu Vinylethergruppen der Ausgangsstoffe ist in Tabelle 2 zusammen mit dem K-Wert der Polyacetale angegeben.

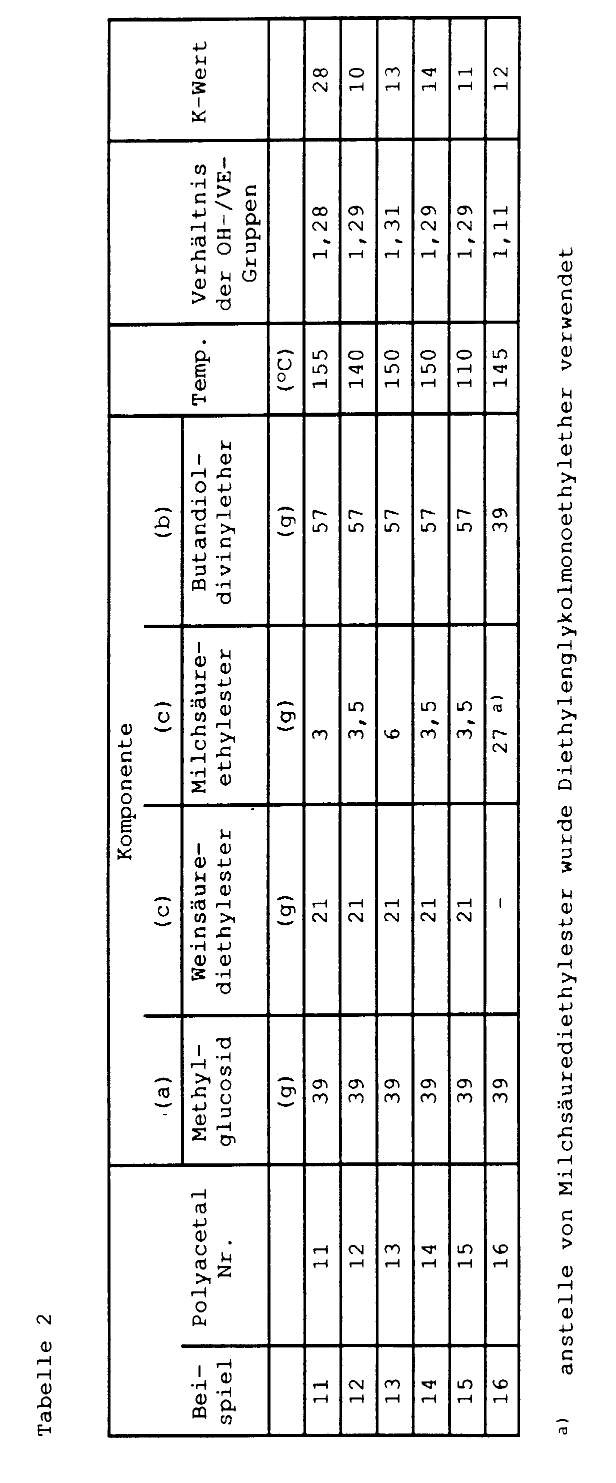

### Beispiele 17 bis 21

In einem Rundkolben werden die in Tabelle 3 angegebenen Mengen an Methylglukosid und Vinyloxyessigsäureethylester eingewogen und mit 20 bis 40 mg Oxalsäure versetzt und auf eine Temperatur von 130°C erhitzt, bis sich eine homogene Reaktionsmischung bildet. Dann fügt man Butandioldivinylether zu und hält das Reaktionsgemisch 1 Stunde bei einer Temperatur von 130°C. Die K-Werte der so erhältlichen Polyacetale sind in Tabelle 3 angegeben. Durch alkalische Nachbehandlung der Polyacetale mit Natronlauge erhält man die Natriumsalze.

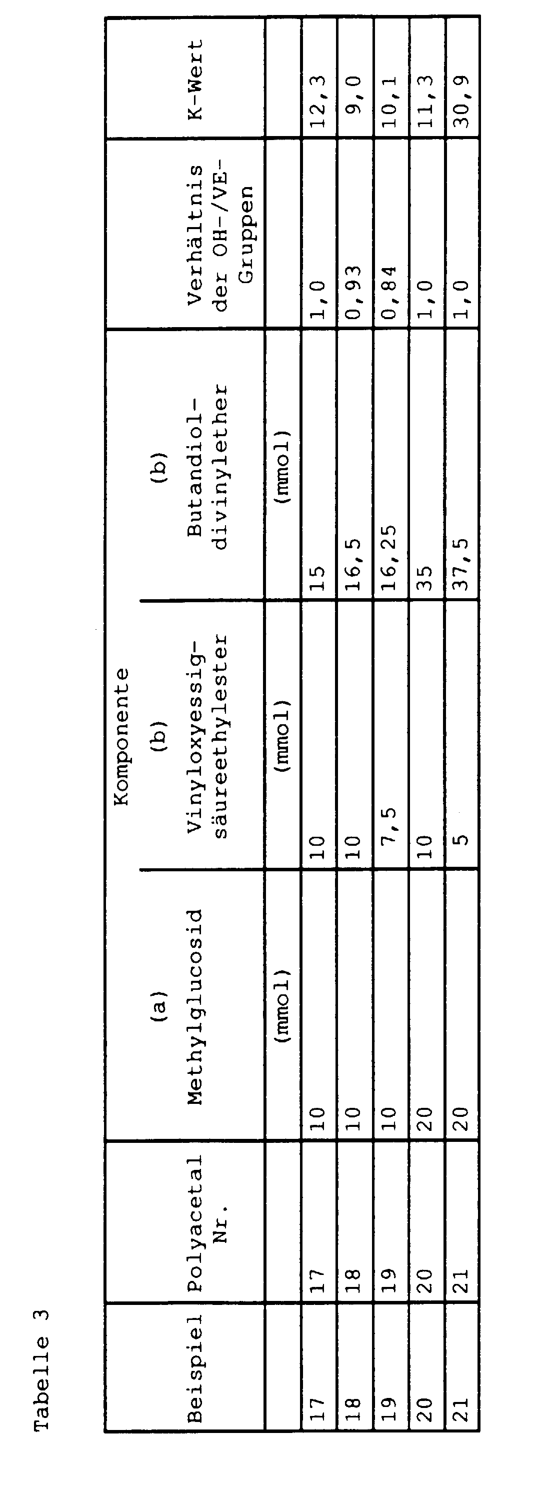

### Beispiel 22

Gemäß der oben angegebenen Vorschrift wird eine Lösung von 3,4 g (0,01 mol) Saccharose in 2,25 g (0,015 mol) Triethylenglykol und 20 mg Oxalsäure hergestellt und auf eine Temperatur von 130°C erhitzt. Bei dieser Temperatur gibt man zunächst 3,9 g (0,0275 mol) 1,4-Butandioldivinylether und dann 7,15 g (0,055 mol) Vinyloxyessigsäureethylester hinzu. Man erhält ein Polyacetal mit einem K-Wert von 15,6. Durch alkalische Nachbehandlung entsteht daraus die Natriumsalzform des Polyacetals. Das Verhältnis von OH-Gruppen zu Vinylethergruppen betrug 1,0.

### Beispiel 23

Gemäß der oben angegebenen Vorschrift wird eine Lösung von 2 g (0,01 mol) Dextrose in 2,25 g (0,015 mol) Triethylenglykol und 20 mg Oxalsäure hergestellt und auf eine Temperatur von 130°C erhitzt. Bei dieser Temperatur fügt man eine Mischung aus 2,8 g (0,02 mol) 1,4-Butandioldivinylether und 5,2 g (0,04 mol) Vinyloxyessigsäureethylester zu. Das Verhältnis der OH-Gruppen zu Vinylether-Gruppen der Ausgangsprodukte beträgt 1,03. Man erhält ein Polyacetal mit einem K-Wert von 11. Daraus ist durch alkalische Nachbehandlung die Natriumsalzform der Polyacetale erhältlich.

### Beispiel 24

Gemäß der oben angegebenen Vorschrift wird eine Lösung aus 2,0 g (0,01 mol) Dextrose in 2,25 g (0,015 mol) Triethylenglykol hergestellt und mit 20 mg Oxalsäure versetzt. Das Reaktionsgemisch wird auf eine Temperatur von 130°C erhitzt und bei dieser Temperatur mit einer Mischung von 3,55 g (0,025 mol) 1,4-Butandiol-divinylether und 3,9 g (0,03 mol) Vinyloxyessigsäureethylester versetzt. Man erhält ein Polyacetal mit einem K-Wert von 13,2. Aus diesem Polyacetal ist durch alkalische Nachbehandlung mit Natronlauge die Natriumsalzform des Polyacetals erhältlich.

### Beispiel 25

Eine Mischung aus 18,2 g (0,1 mol) Sorbit, 0,15 g Oxalsäure und 13 g (0,1 mol) Vinyloxyessigsäureethylester wird auf eine Temperatur von 110°C erhitzt und 2 Stunden bei dieser Temperatur gerührt. Dabei entsteht aus der anfangs zweiphasigen Reaktionsmischung ein homogenes Reaktionsprodukt. Man fügt dann 14,2 g (0,1 mol) Butandioldivinylether zu und nach 1 Stunde Reaktionszeit 28 g (0,1 mol) Octadecylvinylether und rührt das Reaktionsgemisch dann noch 1 Stunde bei einer Temperatur von 110°C. Danach beträgt der Gehalt an Vinylethergruppen 0,0003 mol. Durch alkalische Nachbehandlung erhält man das Natriumsalz. Es besitzt Tensideigenschaften.

### Anwendungstechnische Prüfungen

### CD-Test (Clay-Dispergiertest)

Als Modell für partikulären Schmutz wird feingemahlener China-Clay SPS 151 benutzt- 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein monoexpotentielles Zeitgesetz beschrieben werden kann, gibt T die Zeit an, in der die Trübung auf 1/e-tel des Ausgangszustandes zum Zeitpunkt t=0 abfällt.

Je höher ein Wert für T ist, um so langsamer setzt sich die Dispersion ab.

**Tabelle 4**

| Beispiel | Polyacetal Nr. | Trübung nach Lagerung | | | Dispersionskonstante T (min) |
|---|---|---|---|---|---|
| | | sofort | 30 min | 60 min | |
| | | (NTU) | | | |
| 26 | 1 | 700 | 520 | 480 | 221 |
| 27 | 2 | 680 | 450 | 410 | 176 |
| 28 | 11 | 650 | 410 | 370 | 157 |
| | | | | | |
| | Vgl.Bsp. 1 ohne Polyacetal | 600 | 37 | 33 | 41 |

Die oben beschriebenen Polyacetale können als Viskositätserniedriger für Tenside verwendet werden. Beim Verdünnen von konzentrierten, wasserarmen oder wasserfreien Tensidformulierungen mit Wasser, wie dies im Bereich der gewerblichen Wäschereien oder bei der Herstellung von Waschmittelformulierungen üblich ist, tritt häufig ein Konzentrationsbereich mit einer sehr hohen Viskosität auf. Diese Erscheinung ist beim Transport der Formulierungen in Rohrleitungen, der Dosierung mit Hilfe von Pumpen und der Auflösegeschwindigkeit in der Waschflotte oft störend. Bei einer hohen Viskosität muß ein hoher Aufwand an mechanischer Energie zur Verarbeitung der Tenside aufgewandt werden. Außerdem ist der weitere Auflösevorgang der Tenside aufgrund der hohen Viskosität eines teilweise verdünnten Tensids mit erhöhtem Zeitaufwand verbunden. Die Zunahme der Viskosität von Tensiden beim Verdünnen mit Wasser tritt vor allem bei nichtionischen Tensiden auf, insbesondere bei polyalkoxylierten Verbindungen . Sofern man den Tensiden die oben beschriebenen Polyacetale in Mengen von 0,1 bis 50, vorzugsweise 0,5 bis 10 Gew.-% zusetzt, kann die Viskosität solcher Mischungen beim Verdünnen deutlich vermindert werden. Die erfindungsgemäß in Waschmitteln zu verwendenden Polyacetale werden dabei vorzugsweise zuerst im konzentrierten Tensid gelöst oder dispergiert. Danach wird die Mischung durch Zugabe von Wasser verdünnt. Das mit den erfindungsgemäß zu verwendenden Polyacetalen versetzte Tensidkonzentrat kann auch in eine wäßrige Waschflotte eingetragen werden. Es ist aber auch möglich, eine bereits mit Wasser versetzte hochviskose verdünnte wäßrige Tensidlösung mit den erfindungsgemäß zu verwendenden Polyacetalen zu versetzen, um die Viskosität nachträglich zu erniedrigen.

### Beispiel 29 bis 34

Die in Tabelle 5 angegebenen Polyacetale werden auf ihre Eigenschaft als Fließverbesserer für nichtionische Tenside geprüft, indem man eine Mischung aus einem wasserfreien Tensid und den in der Tabelle 5 angegebenen Polyacetalen herstellt. Als Tensid wurde das Additionsprodukt von 7 mol Ethylenoxid an 1 mol eines C₁₃/C₁₅-Alkoholgemisches verwendet. Der Anteil der Polyacetale in der Mischung betrug 5 %. In Tabelle 5 sind die Viskositäten der beschriebenen Mischung aus dem obengenannten Tensid und den Polyacetalen bei unterschiedlichen Gehalten an Wasser angegeben. Wie aus der Tabelle hervorgeht, wirken die darin beschriebenen Polyacetale als Viskositätserniedriger für das wasserhaltige Tensid.

**Tabelle 5**

| Fließverbesser für nichtionische Tenside Viskositätsmessungen in Abhängigkeit vom Tensidgehalt | | | | | |
|---|---|---|---|---|---|
| Beispiel | Polyacetal Nr. | Viskosität [mPas] der wäßrigen Tensidmischung mit einem Gehalt an nichtionischem Tensid von | | | |
| | | 80 % | 60 % | 40 % | 20 % |
| 29 | 5 | 92 | 6050 | 486 | 169 |
| 30 | 6 | 90 | 6210 | 591 | 172 |
| 31 | 7 | 106 | 3560 | 356 | 287 |
| 32 | 13 | 148 | 4120 | 412 | 250 |
| 33 | 14 | 121 | 3840 | 671 | 262 |
| 34 | 15 | 158 | 3670 | 651 | 281 |
| | Vgl.bsp.Nr.2 | | | | |
| | ohne Polymer | 46000 | 25000 | 158000 | 1000 |

### Beispiele 35 bis 37

Aufgrund der viskositätserniedrigenden Wirkung sind die erfindungsgemäß zu verwendenden Polymeren wichtige Hilfsmittel bei der Herstellung phosphatreduzierter und phosphatfreier Wasch- und Reinigungsmittel. Durch die Verwendung dieser Hilfsmittel gelingt es, die Slurry-Konzentration im Crutcher auf mindestens 80 % anzuheben. Dies bedeutet eine bessere Wirtschaftlichkeit durch günstigere Auslastung des Sprühturmes sowie eine Einsparung an Energie, weil weniger Wasser verdampft werden muß. Die homogenisierende und viskositätserniedrigende Wirkung der erfindungsgemäß zu verwendenden Polymerisate wird im folgenden durch Viskositätsmessungen an Waschmittelformulierungen veranschaulicht. Als Meßgerät dient ein Rheometer der Fa. Physika. Meßsystem ist ein Z 3 DIN-Typ. Als Waschmittelslurry wird eine Aufschlämmung von 80 Gew.-% Waschmittelbestandteilen und 20 Gew.-% Wasser verwendet. Als viskositätserniedrigende Zusätze werden die in Tabelle 6 jeweils angegebenen Polyacetale in einer Menge von 2 Gew.-%, bezogen auf die Waschmittelformulierung, eingesetzt.

Das Waschmittel zur Herstellung des Slurry setzt sich folgendermaßen zusammen:
- 10 Gew.-%: Dodecylbenzolsulfonat in Form des Natriumsalzes
- 6 Gew.-%: Tensid (Anlagerungsprodukt von 7 Mol Ethylenoxid an 1 Mol eines C₁₃/C₁₅-Alkoholgemisches)
- 30 Gew.-%: Zeolith A
- 10 Gew.-%: Soda
- 5 Gew.-%: Natriummetasilikat mit 5 H₂O und
- 39 Gew.-%: Natriumsulfat.

Alle oben aufgeführten Waschmittelbestandteile und das in Tabelle 6 jeweils angegebene Polyacetal wurden bei 60°C mit Hilfe eines Flügelrührers in Wasser eingerührt, so daß eine Mischung, bestehend aus
80 Gew.-Teilen der oben beschriebenen Waschmittelbestandteile,
18 Gew.-Teilen Wasser und
2 Gew.-Teilen Polyacetal
entstand. Die Viskositäten der Slurries wurden bei 20°C und einer Schergeschwindigkeit von 45 Sekunden⁻¹ gemessen. Die Ergebnisse sind in Tabelle 6 angegeben.

Aus den Meßwerten in Tabelle 6 ist deutlich zu erkennen, daß die Polyacetale homogenisierende und viskositätserniedrigende Wirkung auf die Waschmittelslurries besitzen.

**Tabelle 6**

| Fließverbesserer für Waschmittelslurries | | | |
|---|---|---|---|
| Beispiel | Polyacetal | Viskosität | visuelles Aussehen der Slurries |
| | | (mPas) | |
| 35 | 3 | 156 | niedrigviskos, homogen verteilt |
| 36 | 4 | 172 | niedrigviskos, homogen verteilt |
| 37 | 12 | 113 | niedrigviskos, homogen verteilt |
| | Vglbsp.Nr.3 | | |
| | ohne Polymer | 28700 | sehr pastös, nicht homogen verteilt |

## Patentansprüche

1. Verwendung von Acetaldehydacetaleinheiten enthaltenden löslichen Polyacetalen, die erhältlich sind durch kationisch initiierte Polyaddition von
(a) Verbindungen, die mindestens 3 Hydroxygruppen enthalten,
(b) endständige Vinylethergruppen enthaltenden Divinylethern oder Mischungen aus solchen Divinylethern und Monovinylethern und
(c) Dihydroxyverbindungen und/oder Monohydroxyverbindungen,
wobei das Verhältnis der Summe der Hydroxygruppen der Verbindungen (a) und (c) zur Summe der Vinylethergruppen der Verbindungen (b) 0,1 bis 10 beträgt, als Zusatz zu phosphatarmen und phosphatfreien Wasch- und Reinigungsmitteln.

2. Verwendung nach Anspruch 1, dadurch gekennzeichnet, daß in den Polyacetalen das Verhältnis der Summe der Hydroxygruppen der Verbindungen (a) und (c) zur Summe der Vinylethergruppen der Verbindungen (b) 0,5 bis 5 beträgt.

3. Verwendung nach Anspruch 1, dadurch gekennzeichnet, daß man die Polyacetale als Dispergiermittel für feinteilige Mineralien einsetzt.

4. Verwendung nach Anspruch 1, dadurch gekennzeichnet, daß man die Polyacetale als Viskositätserniedriger für Tenside einsetzt.

## Claims

1. The use of soluble polyacetals containing acetaldehyde acetal units and obtainable by cationically initiated polyaddition of
a) compounds containing at least 3 hydroxyl groups,
b) divinyl ethers containing terminal vinyl ether groups, or mixtures of such divinyl ethers and monovinyl ethers, and
c) dihydroxy compounds and/or monohydroxy compounds,
wherein the ratio of the sum of the hydroxyl groups of compounds (a) and (c) to the sum of the vinyl ether groups of compounds (b) is from 0.1:1 to 10.1, as admixture in phosphate-reduced and phosphate-free detergents and cleaners.

2. The use as claimed in claim 1, characterized in that in the polyacetals the ratio of the sum of the hydroxyl groups of compounds (a) and (c) to the sum of the vinyl ether groups of compounds (b) is from 0.5:1 to 5:1.

3. The use as claimed in claim 1, characterized in that the polyacetals are used as dispersants for finely divided materials.

4. The use as claimed in claim 1, characterized in that the polyacetals are used as viscosity reducers for surfactants.

## Revendications

1. Utilisation de polyacétals solubles contenant des motifs acétal d'acétaldéhyde, qui sont obtenus par polyaddition amorcée par voie cationique de
a) composés qui contiennent au moins 3 groupements hydroxy,
b) divinyléthers contenant des groupements éther vinylique terminaux ou mélanges de tels divinyléthers et de monovinyléthers et
c) composés dihydroxylés et/ou composés monohydroxylés,
le rapport de la somme des groupements hydroxy des composés a) et c) à la somme des groupements éther vinylique des composés b) étant compris entre 0,1 et 10, comme additif à des produits de lavage et de nettoyage pauvres en phosphates et dépourvus de phosphates.

2. Utilisation selon la revendication 1, caractérisée en ce que, dans les polyacétals, le rapport de la somme des groupements hydroxy des composés a) et c) à la somme des groupements éther vinylique des composés b) est compris entre 0,5 et 5.

3. Utilisation selon la revendication 1, caractérisée en ce que l'on utilise les polyacétals comme dispersants pour des minéraux finement divisés.

4. Utilisation selon la revendication 1, caractérisée en ce que l'on utilise les polyacétals comme abaisseurs de viscosité pour des tensio-actifs.
